## Europäisches Patentamt
## European Patent Office
## Office européen des brevets

(19)

(11) Veröffentlichungsnummer : **0 184 143**
**B1**

(12) # EUROPÄISCHE PATENTSCHRIFT

(45) Veröffentlichungstag der Patentschrift :
28.03.90

(51) Int. Cl.⁵ : **H 02 B   1/04**

(21) Anmeldenummer : 85115118.3

(22) Anmeldetag : 28.11.85

(54) Vorrichtung zur Befestigung eines elektrischen Schaltgerätes.

(30) Priorität : 29.11.84 DE 3443540

(43) Veröffentlichungstag der Anmeldung :
11.06.86 Patentblatt 86/24

(45) Bekanntmachung des Hinweises auf die Patenterteilung : 28.03.90 Patentblatt 90/13

(84) Benannte Vertragsstaaten :
AT BE CH DE FR GB IT LI LU NL SE

(56) Entgegenhaltungen :
EP--A-- 0 075 661
DE--A-- 2 912 076
DE--A-- 2 928 118
DE--A-- 3 316 389

(73) Patentinhaber : **Christian Geyer GmbH & Co.**
**Nimrodstr. 10-18**
**D-8500 Nürnberg 70 (DE)**

(72) Erfinder : **Schulz, Franz Wilhelm**
**Zedernstrasse 5**
**D-8501 Wendelstein (DE)**
Erfinder : **Zenger, Dieter**
**Dr.-Kitteler-Strasse 2**
**D-8540 Schwabach (DE)**

(74) Vertreter : **Patentanwälte Czowalla . Matschkur &**
**Partner**
**Dr.-Kurt-Schumacher-Strasse 23 Postfach 9109**
**D-8500 Nürnberg 11 (DE)**

EP 0 184 143 B1

## Beschreibung

Die Erfindung betrifft eine Vorrichtung zur Befestigung eines elektrischen Reiheneinbaugerätes, insbesondere FI-Schutzschalter, Leitungsschutzschalter, Schütze, Sicherungen, Sicherungslastschalter, Lichtsignale, im Folgenden elektrisches Schaltgerät genannt, gemäß dem Oberbegriff des Schutzanspruches 1 (Siehe EP-A-0075661).

Diese elektrischen Schaltgeräte werden üblicherweise nebeneinander angereiht und an den zugangsseitigen Klemmen mittels einer durchgehenden Sammelschiene elektrisch verbunden.

Für einen evtl. notwendigen Austausch von einem der aneinandergereihten Schaltgeräte ist es erforderlich, die Befestigungsvorrichtung so auszubilden, daß das einzelne Schaltgerät nach dem Lösen der elektrischen Verbindung mit der Sammelschiene von der Tragschiene abnehmbar ist.

In der DE-OS 33 16 389 wird vorgeschlagen, die Bodenfläche der querrinnenartigen Ausnehmung über den Tragschienenbereich hinaus bis zum einen Gehäuserand zu verbreitern und in dieser Ausnehmungsverbreiterung eine von der Gehäusevorderseite aus abnehmbare oder in die Bodenfläche einziehbare Verrastungskralle anzuordnen.

Die Ausführung mit einer abnehmbaren Kralle vereinfacht zwar das Abnehmen des Schaltgerätes, ist aber problematisch hinsichtlich der Handhabung, wenn unter Spannung gearbeitet werden muß, da das abnehmbare Teil unabsichtlich auf darunter befindliche elektrische Teile fallen kann.

Die weitere Lösung mit der einziehbaren Kralle ist auch nicht generell anwendbar, da bei der kompakten Bauweise dieser Schaltgeräte bei vorgegebenen Abmessungen, insbesondere nach DIN 43 880 der dafür erforderliche Einbauraum nicht zur Verfügung steht.

Der Erfindung liegt die Aufgabe zugrunde, eine Vorrichtung zur Befestigung eines elektrischen Schaltgerätes durch Aufschnappen so auszubilden, daß die vorgenannten Nachteile vermieden werden.

Diese Aufgabe wird erfindungsgemäß durch den kennzeichnenden Teil des Schutzanspruches 1 gelöst.

Darüber hinaus ist es erforderlich, das Schrägstellen des Schaltgerätes auf der Tragschiene beim Anziehen der Kontaktschraube zu verhindern, da dazu die auf den Schieber wirkenden Federkräfte allein nicht ausreichen.

Dazu wird in weiterer Ausgestaltung der Erfindung eine zusätzlich gegen die Außenkante des Tragschienenschenkels gerichtete Arretiereinrichtung vorgeschlagen, deren Stirnseite entweder abgeschrägt oder abgestuft ist, um die Fertigungstoleranz der Tragschiene auszugleichen.

In weiterer Ausgestaltung der Erfindung wird vorgeschlagen, dem Schieber zusätzlich zu der den Tragschienenschenkel hintergreifenden Nase eine den Tragschienenschenkel übergreifende Kralle anzuformen und die auf den Schieber wirkende Kraft mittels einer Drehfeder oder Omegafeder zu erzeugen.

Ausführungsbeispiele der Erfindung werden an Hand der Abbildungen erläutert.

Es zeigt

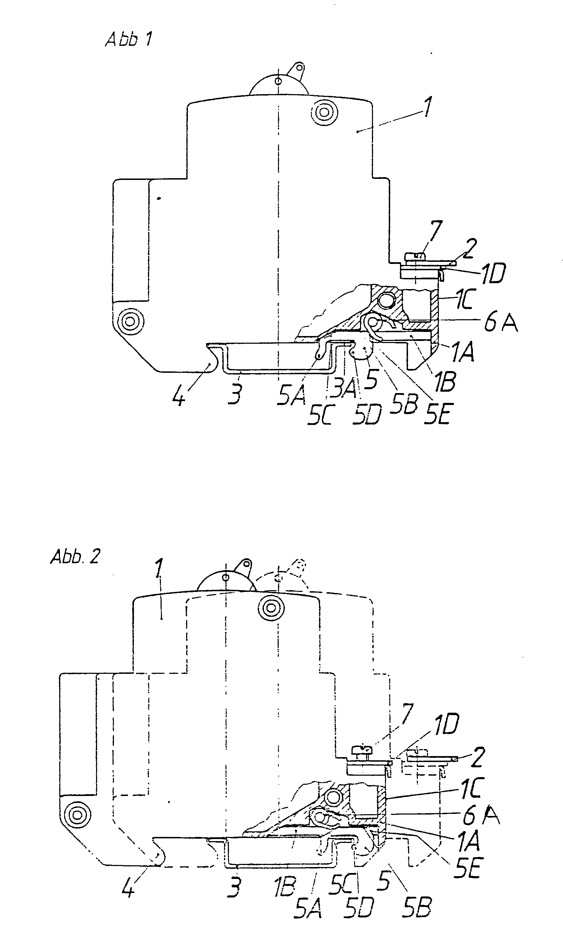

Abb. 1 ein auf eine Tragschiene aufgeschnapptes Schaltgerät, das zugangsseitig mittels einer Sammelschiene eingespeist wird, und

Abb. 2 das auf die Tragschiene aufgeschnappte Schaltgerät in der Betriebsposition (strichliert dargestellt) und quer zur Tragschiene verschoben in der Austauschposition, in der das Schaltgerät von der Tragschiene abgenommen werden kann;

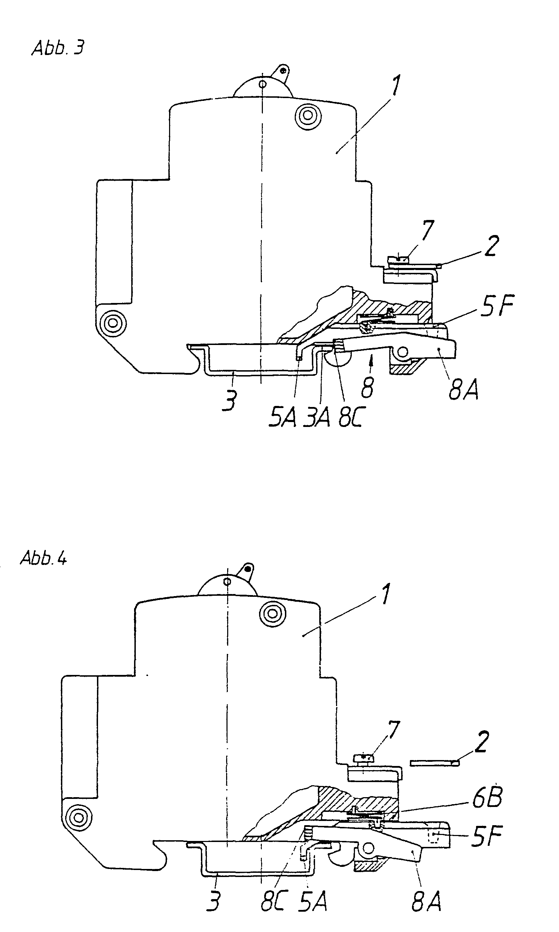

Abb. 3 das wie in Abb. 1 dargestellte Schaltgerät mit der zusätzlichen mechanischen Arretierung;

Abb. 4 das Schaltgerät in Austauschposition, wie in Abb. 2, bei der die Wippe der Arretiereinrichtung ausgeklinkt ist;

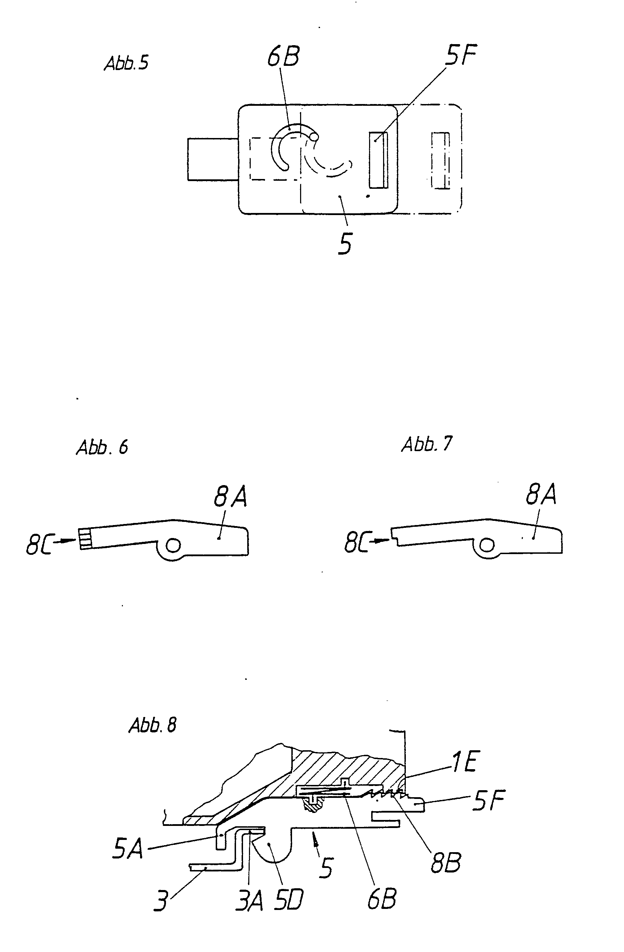

Abb. 5 die Wirkungsweise der Omegafeder, deren einer Schenkel im Schieber und deren anderer Schenkel an der Bodenfläche des Schaltgerätes verhakt ist;

Abb. 6 die Arretiereinrichtung in Form einer Wippe mit abgeschrägter Stirnseite;

Abb. 7 die Arretiereinrichtung nach Abb. 6 mit abgestufter Stirnseite;

Abb. 8 den Schieber mit angeformter Arretiereinrichtung.

Das Schaltgerät 1 wird an der Tragschiene 3 mittels der am Boden des Schaltgerätes 1 fest angeformten Nase 4 und der am Schieber 5 angeformten Nase 5D unter dem Druck der Feder 6 in Form einer Drehfeder 6A oder Omegafeder 6B arretiert.

Die Drehfeder 6A stützt sich mit ihrem einen Schenkel am Schaltergehäuse ab und wirkt mit ihrem zweiten Schenkel gegen die Anlaufschräge 5E des Schiebers 5, der mittels der ihm angeformten Ansätze in den im Schaltergehäuse angeformten Führungen 18 geführt und gegen die Tragschiene 3 gedrückt wird.

Die Omegafeder 6B dagegen wird in der Bodenfläche 1E des Schaltgerätes 1 und dem zweiten Schenkel im Gleitrücken 5B des Schiebers 5 eingehakt.

Die zugangsseitige Einspeisung der nebeneinander auf der Tragschiene 3 angereihten Schaltgeräte 1 erfolgt wahlweise als einpoliger Wechselstrom oder dreipoliger Drehstrom mittels dementsprechender Sammelschiene 2, die an den Kontaktteilen 1D des Schaltgerätes 1 aufliegt. Die Sammelschiene 2 überdeckt dabei die Kontaktteile 1D sowie die darunter befindliche Außenkontur 1C des Schaltgerätes 1.

Beim Abnehmen des Schaltgerätes 1 von der Hutschiene 3 ist die Kontaktschraube 7 zu lösen und das Schaltgerät quer zur Tragschienenachse entlang deren Auflagefläche soweit zu verschieben, bis die Kontaktteile 1D sowie die darunterliegende äußere Kontur 1C nicht mehr von der Sammelschiene verdeckt werden. Der Verschiebeweg wird dabei von der Wandung 1A des Schaltgerätes 1 vorgegeben.

Beim Verschieben des Schaltgerätes 1 wird entlang des Verschiebeweges der auf die Anlaufschräge 5E des Schiebers 5 wirkende Schenkel der Drehfeder 6A soweit ausgelenkt, bis er an dem Gleitrücken 5B aufliegt. Dabei wird der gegen die Tragschiene wirkende Druck aufgehoben und senkrecht gegen den Schieber gerichtet.

An dem Gleitrücken 5B anschließend befindet sich die Anschlagschräge 5C, gegen die der Schenkel der Drehfeder 6 in der Abnahmeposition des Schaltgerätes 1 wirkt, so daß der auf den Schieber 5 wirkende Druck nun der Tragschiene entgegengerichtet ist.

Bei der Omegafeder 6B dagegen wird beim Verschieben des Schaltgerätes 1 entlang des Verschiebeweges der Federdruck zur Seitenwand des Schaltgerätes hin ausgelenkt und in der Austauschposition nach außen hin umgelenkt.

Der Schieber 5 des Austauschschaltgerätes ist in die Austauschposition zu bringen, so daß das Schaltgerät 1 auf die Tragschiene 3 aufgesetzt werden kann. Anschließend wird das Schaltgerät parallel zur Tragschiene 3 in Richtung der Sammelschiene 2 hin in die Betriebsposition geschoben. Dabei wird der Schieber 5 von der ihm angeformten und den Tragschienenschenkel übergreifenden Kralle 5A mitgenommen bis in die Betriebsposition hin, so daß die auf den Schieber 5 wirkende Federkraft der Feder 6 wieder zum Tragschienenschenkel 3A hin gerichtet ist.

Da die Andruckskraft der Feder, unabhängig von Form und Funktion, nicht ausreicht, um eine Schrägstellung des Schaltgerätes beim Anziehen der Kontaktschraube 7 zu verhindern, ist eine zusätzliche Arretiereinrichtung 8, vorzugsweise in Form einer Wippe 8A, vorgesehen, deren Stirnseite 8C gegen die Außenkante des Tragschienenschenkels 3A gerichtet ist.

Um die Fertigungstoleranz der Tragschiene 3 auszugleichen, wird die Stirnseite 8C der Wippe 8A entweder abgeschrägt oder abgestuft.

An Stelle eines zusätzlichen Teiles kann die Arretiereinrichtung 8 auch an den Schieber 5 in Form von Sägezähnen 8B angeformt werden, die in an der Bodenfläche 1E des Schaltgerätes 1 angeordnete komplementäre Sägezähne greifen.

Der Schieber 5 kann wahlweise aus Formstoff oder aus Metall gefertigt sein.

## Patentansprüche

1. Vorrichtung zur Befestigung eines elektrischen Schaltgerätes (1) auf einer hutprofilartig ausgebildeten Tragschiene (3) durch Aufschnappen mit zwei an der Montagefläche des Schaltgerätes (1) angeordneten sich gegenüberliegenden und die Schenkelenden der Tragschiene (3) nach dem Aufschnappen umfassenden Nasen (4, 5D), von denen eine (4) vorzugsweise am Boden des Schaltgerätes (1) und die andere (5D) an einem Schieber (5) angeformt ist, welcher mittels einer Feder (6) quer zur Tragschienenlängsachse nach innen gedrückt wird, wobei der Schieber (5) einerseits unter dem nach innen gerichteten Druck der Feder (6) mit seiner angeformten Nase (5D) den einen Tragschienenschenkel (3A) hintergreift, andererseits gegen den Druck der Feder (6) zurückschiebbar ist, dadurch gekennzeichnet, daß beim Zurückschieben der nach innen gerichtete Druck der Feder (6) auf den Schieber (5) aufgehoben wird, so daß das Schaltgerät (1) so weit quer zur Tragschiene (3) von der Sammelschiene (2) weg verschiebbar ist, daß die dem Anschluß an die Sammelschiene (2) dienenden Kontaktteile (1D) sowie die darunter befindliche Kontur (1C) des Schaltgerätes (1) nicht mehr von der Sammelschiene (2) überdeckt werden.

2. Vorrichtung zur Befestigung eines elektrischen Schaltgerätes nach Anspruch 1, gekennzeichnet durch eine zusätzliche gegen die Außenkante des Tragschienenschenkels (3A) gerichtete Arretiereinrichtung (8).

3. Vorrichtung zur Befestigung eines elektrischen Schaltgerätes nach Anspruch 1, dadurch gekennzeichnet, daß dem Schieber (5) eine den Tragschienenschenkel (3A) übergreifende Kralle (5A) angeformt ist.

4. Vorrichtung zur Befestigung eines elektrischen Schaltgerätes nach Anspruch 1 und 3, dadurch gekennzeichnet, daß die Feder (6) als Drehfeder (6A) ausgebildet ist, deren am Gleitrücken (5B) des Schiebers (5) anliegender Schenkel eine von diesem Gleitrücken (5B) weg gerichtete Biegung aufweist.

5. Vorrichtung zur Befestigung eines elektrischen Schaltgerätes nach Anspruch 1 und 3, dadurch gekennzeichnet, daß die Feder (6) als Omegafeder (6B) ausgebildet ist, deren einer Schenkel in der Bodenfläche des Schaltgerätes (1) und deren zweiter Schenkel am Schieber (5) eingehakt ist, so daß beim Zurückschieben des Schiebers (5) die Druckrichtung nach außen gelenkt wird.

6. Vorrichtung zur Befestigung eines elektrischen Schaltgerätes nach einem der Ansprüche 1, 3, 4 und 5, dadurch gekennzeichnet, daß dem Schieber (5) beidseitig je ein Ansatz angeformt ist, welcher in dem entsprechenden Führungsschlitz (1B) des Schaltgerätes greift.

7. Vorrichtung zur Befestigung eines elektrischen Schaltgerätes nach den Ansprüchen 1, 3, 4 dadurch gekennzeichnet, daß am inneren Ende des Gleitrückens (5B) des Schiebers (5) eine Anschlagschräge (5C) angeformt ist, gegen die die Drehfeder (6A) in der Austauschposition des Schaltgerätes drückt.

8. Vorrichtung zur Befestigung eines elektrischen Schaltgerätes nach Anspruch 1, dadurch gekennzeichnet, daß dem Schieber (5) eine Betätigungslasche (5F) angeformt ist, die aus der Kontur (1C) des Schaltgerätes ragt.

9. Vorrichtung zur Befestigung eines elektrischen Schaltgerätes nach Anspruch 1 und 2, dadurch gekennzeichnet, daß die Arretiereinrichtung (8) als kippbar am Schaltgerät (1) gelagerte Wippe (8A) ausgebildet ist, deren einer Schenkel gegen die Tragschiene (3) gerichtet ist und deren zweiter entgegengesetzter Schenkel aus der Kon-

tur (1C) des Schaltgerätes (1) herausragt.

10. Vorrichtung zur Befestigung eines elektrischen Schaltgerätes nach Anspruch 1, 2 und 9, dadurch gekennzeichnet, daß die gegen die Außenkante des Tragschienenschenkels (3A) gerichtete Stirnseite (8C) der Arretierungseinrichtung (8) stufenförmig abgesetzt ist.

11. Vorrichtung zur Befestigung eines elektrischen Schaltgerätes nach Anspruch 1, 2 und 9, dadurch gekennzeichnet, daß die gegen die Außenkante des Tragschienenschenkels (3A) gerichtete Stirnseite (8C) der Arretiereinrichtung (8) eine Schräge aufweist.

12. Vorrichtung zur Befestigung eines elektrischen Schaltgerätes nach Anspruch 1 und 2, dadurch gekennzeichnet, daß dem Schieber (5) die Arretierungseinrichtung (8) in Form von Sägezähnen (8B) einteilig angeformt ist, die sich an an der Bodenfläche (1E) des Schaltgerätes (1) angeformten Sägezähnen abstützen.

## Claims

1. An arrangement for attaching an electrical switching device (1) to a top hat shaped mounting rail (3) by means of two lugs (4, 5D) that are attached to opposite sides of the electrical switching device (1) and which embrace the outer webs of the U-section after the electrical switching device (1) has been snapped on, one (4) of the said lugs being preferably attached to the base of the electrical switching device (1) whereas the other said lug (5D) is mounted to a slider device (5) that is pressed inwards via a spring (6) that is mounted at right angles to the top hat shaped mounting rail, whereby on the one hand said slider device (5) with said lug (5D) grips the outer web (3A) of the top hat shaped mounting rail on the other hand said slider device can be slid back against the pressure of said spring (6) characterized by the fact that, said sliding back action causes the pressure of the spring (6) against the slider (5) to be cancelled so that the electrical switching device (1) can be pushed back from the bus bar (2) at right angles to the top hat shaped mounting rail (3) so that the contacts (10) to the bus bar and also the underlying contour (1C) of the electrical switching device (1) are no longer overlapped by the bus bar (2).

2. An arrangement for attaching an electrical switching device according to claim 1, characterized by an additional arresting device (8) that operates against the outer face of the mounting rail web (3A).

3. An arrangement for attaching an electrical switching device according to claim 1, characterized by the fact, that the engaging claw (5A) of the slider (5) is shaped in a manner so that it corresponds to the shape of the mounting rail web (3A).

4. An arrangement for attaching an electrical switching device according to claims 1 and 3, characterized by the fact, that the spring (6) is shaped like a torsion spring (6A) and that the leg of said spring, which lies against the gliding face (5B) of the slider (5), is bent in a direction away from said gliding face (5B).

5. An arrangement for attaching an electrical switching device according to claims 1 and 3, characterized by the fact, that spring (6) is Omega-shaped (6B) and that one leg of said spring hooks into the base of the electrical switching device (1) whereas the second leg hooks into the slider (5) so that when said slider (5) is pushed back the applied pressure is in an outward direction.

6. An arrangement for attaching an electrical switching device according to claims 1, 3, 4 and 5, characterized by the fact, that the slider (5) is fitted with a shoulder on both sides, said shoulders grip into the respective guide slots (1B) of the electrical switching device.

7. An arrangement for attaching an electrical switching device according to claims 1, 3, 4 characterized by the fact, that the inner end of the gliding face (5B) of the slider (5) is shaped in the form of a bearing angle (5C) against which the torsion spring (6A) is pressed when the electrical switching device is in the replaceable position.

8. An arrangement for attaching an electrical switching device according to claim 1, characterized by the fact, that an actuating strap (5F), formed on the slider (5) projects out of the contour (1C) of the electrical switching device.

9. An arrangement for attaching an electrical switching device according to claims 1 and 2, characterized by the fact, that the arresting device (8), which is mounted on the electrical switching device (1), is designed as a tiltable rocker (8A), whereby one leg of said tiltable rocker points towards the mounting rail (3) whereas the second leg, which points in the opposite direction, protrudes out of the contour (1C) of the electrical switching device (1).

10. An arrangement for attaching an electrical switching device according to claims 1, 2 and 9, characterized by the fact, that the front face (8C), of the arresting device (8), which presses against the outer face of the mounting rail web (3A), is shaped like a step.

11. An arrangement for attaching an electrical switching device according to claims 1, 2 and 9, characterized by the fact, that the front face (8C) of the arresting device (8), which is directed towards the mounting rail web.(3A), is angular in shape.

12. An arrangement for attaching an electrical switching device according to claims 1 and 2, characterized by the fact, that the slider (5) of the arresting device (8) is saw-toothed shaped (8B) on one side, said saw tooth serrations brace against the saw teeth serrations formed in the base (1E) of the electrical switching device (1).

## Revendications

1. Dispositif pour la fixation immédiate d'un appareillage (1) électrique, sur profilé support (3) chape, par deux taquets disposés sur la surface de montage de l'appareillage (1) électrique et reposant en face l'un de l'autre. Les extrémités des branches du profilé support (3), dont l'une (4) est de préférence façonnée avec la partie inférieure de l'appareillage, et l'autre (5D) avec une coulisse (5), qui est pressée vers l'intérieur par ressort (6), transversalement à l'axe longitudinal du profilé support. D'un côté, la coulisse (5) se trouvant sous pression intérieure, attaque de l'arrière avec son taquet (3A), l'une des branches du profilé support et de l'autre côté, refoulable contre la pression de ressort (6), est caractérisé par le fait que, lors du refoulement, la pression du ressort (6) dirigée vers l'intérieur sur la coulisse (5), est supprimée, de telle sorte que l'appareillage (1) électrique est transversablement déplaçable le plus possible, du profilé support (3) de la barre collectrice (2), de telle sorte que les éléments de contact (1D) qui servent de connexion avec la barre collectrice, ainsi que le profil (1C) qui se trouve en-dessous de l'appareillage électrique (1), ne sont plus recouverts par la barre collectrice (2).

2. Dispositif pour la fixation d'un appareillage électrique, selon revendication 1, caractérisé par un mécanisme de blocage complémentaire (8), orienté contre le bord extérieur de la branche du profilé support (3A).

3. Dispositif pour la fixation d'un appareillage électrique, selon revendication 1, caractérisé par le fait que la coulisse (5) d'une branche du profilé support (3A) est façonnée comme une griffe (5A) attaquant une des branches du profilé support (3A).

4. Dispositif pour la fixation d'un appareillage électrique, selon revendication 1 et 3, caractérisé par le fait que le ressort (6), formé comme barre de torsion (6A), et dont la branche adjacente au dos coulissant (5B), de la coulisse (5) montre une courbe.

5. Dispositif pour la fixation d'un appareillage électrique, selon revendication 1 et 3, caractérisé par le fait que le ressort (6) forme ressort oméga dont une branche est accrochée dans la surface de fond de l'appareillage électrique (1) et la seconde à la coulisse (5), de telle sorte qu'en cas de refoulement de la coulisse (5), la direction de pression sera guidée vers l'extérieur.

6. Dispositif pour la fixation d'un appareillage électrique, selon une des revendications 1, 3, 4, et 5, caractérisé par le fait que la coulisse (5) porte un épaulement de chaque côté, lequel engrène dans la fente de guidage correspondante (1B) de l'appareillage.

7. Dispositif pour la fixation d'un appareillage électrique, selon les revendications 1, 3, 4 caractérisé par le fait qu'un chanfrein de butée (5C) est formé à l'extrémité intérieure du dos coulissant (5B) de la coulisse (5) contre lequel réagit la barre de torsion (6A) en la position de remplacement de l'appareillage électrique.

8. Dispositif pour la fixation d'un appareillage électrique selon revendication 1, caractérisé par, le fait qu'une bride d'actionnement (5F) est formée sur la coulisse (5), et dépasse le profil (1C) de l'appareillage.

9. Dispositif pour la fixation d'un appareillage électrique, selon revendication 1 et 2, caractérisé par, le fait que l'arrêtage (8) forme bascule (8A) sur l'appareillage (1) et dont une branche est dirigée contre le profilé support (3) et l'autre branche en sens contraire, dépasse du profil (1C) de l'appareillage (1).

10. Dispositif pour la fixation d'un appareillage électrique, selon revendication 1, 2, et 9, caractérisé par, le fait que la partie frontale (8C) de l'arrêtage (8) dirigée, contre le bord extérieur de la branche du profilé support (3A), est décalée sous forme de gradin.

11. Dispositif pour la fixation d'un appareillage électrique, selon revendication 1, 2, et 9, caractérisé par, le fait que la partie frontale (8C) de l'arrêtage (8), dirigée contre le bord extérieur de la branche du profilé support (3A) présente une inclinaison.

12. Dispositif pour la fixation d'un appareillage électrique, selon revendication 1 et 2, caractérisé par, le fait que la coulisse (5) se compose en une seule partie, de dents de scie (8B), qui s'appuient contre celles de la surface (1E) de l'appareillage (1).

*Abb 1*

*Abb. 2*

Abb. 3

Abb. 4

Abb.5

Abb. 6

Abb. 7

Abb. 8